# EUROPÄISCHE PATENTSCHRIFT

(11) **EP 1 920 422 B1**
(45) Veröffentlichungstag und Bekanntmachung des Hinweises auf die Patenterteilung: **09.02.2011**
(21) Anmeldenummer: 06776289.8
(22) Anmeldetag: 18.07.2006
(51) Int. Cl.: G09B 23/28, G06T 15/20

(54) **VERFAHREN UND VORRICHTUNG ZUR NAVIGATION UND MESSUNG IN EINEM MEHRDIMENSIONALEN BILDDATENSATZ**
METHOD AND DEVICE FOR NAVIGATING AND MEASURING IN A MULTIDIMENSIONAL IMAGE DATA SET
PROCEDE ET DISPOSITIF DE NAVIGATION ET DE MESURE DANS UN ENSEMBLE DE DONNEES D'IMAGE A PLUSIEURS DIMENSIONS

(30) Priorität: 01.09.2005 DE 102005041581
(43) Veröffentlichungstag der Anmeldung: 14.05.2008
(73) Patentinhaber: TomTec Imaging Systems GmbH, 85716 Unterschleissheim (DE)
(72) Erfinder: STOCKHAUSEN, Jens, 85386 Eching (DE); SCHRECKENBERG, Marcus, 85356 Freising (DE); BAUMANN, Rolf, 88239 Wangen (DE); HYCA, Martin, 81825 München (DE); GALUSCHKY, Christian, 81371 München (DE); SCHUMMERS, Georg, 80995 München (DE)
(74) Vertreter: Schinkel, Reta
(86) Internationale Anmeldenummer: PCT/EP2006/007061
(87) Internationale Veröffentlichungsnummer: WO 2007/025608

(56) Entgegenhaltungen:
- DE-A1- 10 222 655
- DE-A1- 10 258 952
- US-A- 5 609 485

## Beschreibung

Die Erfindung betrifft ein Verfahren und eine Vorrichtung zur Navigation und Messung in einem mehrdimensionalen Bilddatensatz eines Objekts, der insbesondere durch ein medizinisches Bildgebungsverfahren gewonnen wurde.

In vielen bildgebenden medizintechnischen Verfahren, wie Ultraschall, Magnetresonanztomographie oder optische Kohärenztomographie (OCT), ist es möglich, dreidimensionale (3D) oder vierdimensionale (4D) Bilddatensätze des zu untersuchenden Objekts zu gewinnen. Ein vierdimensionaler Datensatz ist eine zeitliche Sequenz mehrerer dreidimensionaler Aufnahmen. Die Orientierung in einem solchen 3D oder 4D Bilddatensatz eines Organs ist jedoch relativ schwierig und erfordert große Erfahrung des Benutzers, in der Regel des Kardiologen/Radiologen oder Facharztes.

Zur Untersuchung und Durchführung von Messungen in den Bilddaten werden diese daher größtenteils auf zweidimensionalen Schnittbildern betrachtet. Um die Schnittebenen durch den Bilddatensatz zu navigieren, kann der Benutzer bei bekannten Verfahren die Schnittebene in allen 6 Raumrichtungen durch den dreidimensionalen Bilddatensatz bewegen. Oft werden dabei jeweils 3 zueinander senkrechte Schnittbilder dargestellt, die der Benutzer dann verschieben und rotieren kann. Der Benutzer muss sich dabei auf diese Art der Navigation in den 3D/4D Bilddaten einstellen und diese trainieren.

Es ist auch bekannt, eine interessierende Struktur durch "Surface Rendering" oder "Volume Rendering" darzustellen. Dabei wird aus dem 3D Datenvolumen eine 2D Ansicht des Objektes mit schattierten Oberflächen erzeugt. Die interessierende Struktur wird jedoch oft von anderen Objektstrukturen überdeckt, die dann mit Hilfe so genannter "Skalpell" Tools frei geschnitten werden müssen. Ein entsprechendes Verfahren hierfür ist in der DE 103 39 979 A1 offenbart. Hierbei wird auf einem Schnittbild ein Vektor festgelegt, der die interessierende Struktur überspannt. Durch den Anfangspunkt und/oder den Endpunkt des Vektors wird eine Ebene gelegt, die orthogonal auf den Vektor steht, und die Bilddaten jenseits der Ebenen werden ausgeblendet, so dass nur solche Bilddaten dargestellt werden, die zwischen den Ebenen liegen. Dieses Verfahren hat den Nachteil, dass durch die Geometrie der Ebenen jeweils nur ein scheibenförmiger Bereich frei geschnitten werden kann, der oft nicht der Form der interessierenden Struktur entspricht.

Bei der Untersuchung dynamischer Bilddaten ergeben sich ferner Probleme, wenn der Benutzer eine Messung vornehmen, z. B. eine bestimmte Distanz in der Struktur messen will, oder Markierungen an bestimmte anatomische Landmarken setzen will. Dies ist im Stand der Technik nur auf einem statischen Bild möglich, so dass die Dynamik der Struktur während der Messung nicht berücksichtigt wird. Z. B. bei Ultraschalluntersuchungen des Herzens ist der untersuchende Arzt jedoch gewohnt, das Herz in Bewegung zu sehen. Viele Pathologien des Herzen sind erst bei Betrachtung des schlagenden Herzens zu erkennen. Daher ist eine genaue und anatomisch richtige Messung oft nur möglich, wenn die Dynamik der Struktur betrachtet wird.

Die DE 102 22 655 A1 offenbart ein System zum Trainieren der Ultraschalltechnik, ohne den Patienten mit Mehrfachuntersuchungen zu belasten. Der Lernende bewegt dabei ein Steuermittel, wie beispielsweise eine herkömmliche Computermaus, über eine Tischoberfläche oder über ein Körperphantom. Hierzu werden auf einer Anzeigevorrichtung ein schematisches Abbild des zu untersuchenden Körpers und das Abbild eines Schallkopfs gezeigt. Durch die Bewegung des Steuermittels wird auch das Abbild des Schallkopfes auf der Anzeigevorrichtung entsprechend bewegt. Da stets entsprechend der Stellung des Abbilds des Schallkopfes auf der Anzeigevorrichtung ein exakt dieser Stellung entsprechendes Schallbild angezeigt wird, kann über die Bewegung des Abbilds des Schallkopfes und der entsprechenden Schicht des Körpers die Bildinterpretation trainiert werden. Dieses Verfahren ist jedoch ausschließlich zum Training gedacht, da stets der gleiche 3-dimensionale Datensatz verwendet wird. Darüber hinaus ist es lediglich möglich, eine einzige Schicht darzustellen.

Die vorliegende Erfindung hat sich daher die Aufgabe gestellt, Möglichkeiten zur Navigation und zur Durchführung von Messungen in mehrdimensionalen, insbesondere in 3D und 4D, Bilddatensätzen bereit zu stellen, welche die oben genannten Nachteile nicht aufweisen.

Diese Aufgabe löst die Erfindung mit dem Verfahren gemäß Anspruch 1, welches einen Verfahrensschritt zur Navigation in einem mehrdimensionalen Bilddatensatz aufweist, bei welchem der Benutzer durch ein Eingabegerät eine Sichtebene durch den Bilddatensatz bewegt und währenddessen ein dieser Sichtebene entsprechendes Schnittbild dargestellt wird. Die Sichtebene schneidet den Bilddatensatz in einem Winkel, der einem während einer interaktiven bildgebenden Untersuchung enthaltenen Blickwinkel entspricht, wobei die Freiheitsgrade der Bewegung der Sichtebenen den Freiheitsgraden der Bewegung einer "Probe" oder eines Akquisitionsgerätes während einer interaktiven bildgebenden Untersuchung entsprechen. Bei der erfindungsgemäßen Navigation werden also die gewohnten Bewegungen und Sichtweisen des Benutzers nachgebildet. Die Freiheitsgrade der Bewegung werden bewusst auf die Freiheitsgrade beschränkt, die während der interaktiven bildgebenden Untersuchung z. B. während einer Ultraschalluntersuchung zur Verfügung stehen. Dadurch ist die Navigation für den Arzt intuitiv und schnell erlernbar. Darüber hinaus sieht er nur Schnittbilder, die den gewohnten Perspektiven und Schnittbildern entsprechen, so dass nicht die Gefahr besteht, dass er in einem 3D oder 4D Bilddatensatz die Orientierung verliert.

Stellt der Bilddatensatz zum Beispiel ein bewegtes Herz dar, sucht der Benutzer mit der Sichtebene meist zunächst den 4-Kammerblick. Der so genannte 2-Kammerblick und der Langachsenschnitt liegen jeweils ca. um 60° Winkel gegenüber dem 4-Kammerblick gedreht. Deshalb werden gemäß der Erfindung jeweils 1 oder 2 weitere Schnittbilder dargestellt, die um einen festgelegten Winkel gegenüber der Sichtebene gedreht sind.

Besonders bevorzugt entspricht die Sichtebene dem Schallfeld eines Ultraschallwandlers, welches z. B. eine zweidimensionale Fächerform aufweisen kann. Dementsprechend entspricht die Bewegung der Sichtebene vorzugsweise der Bewegung des Ultraschallwandlers, d. h. die Sichtebene kann geschwenkt, gedreht und auf einer virtuellen Aufnahmeoberfläche verschoben werden. Die Bewegungsfreiheitsgrade werden vorzugsweise über ein einziges Eingabegerät, wie z. B. eine Computermaus gesteuert, wobei die Schwenkbewegung, die Drehbewegung und die Verschiebung z.B. durch die linke oder rechte Maustaste, oder durch ein Rändelrad der Maus gesteuert werden. Dadurch kann der Blick während der gesamten Navigation auf den Bilddaten belassen werden.

Vorzugsweise enthält das Verfahren einen weiteren Verfahrensschritt zum Freischneiden der interessierenden Struktur, bei welchem auf einem Schnittbild ein Vektor festgelegt wird, der die interessierende Struktur überspannt. Durch den Endpunkt und/oder den Anfangspunkt des Vektors wird eine gerade oder gewölbte Ebene oder eine Freiformfläche durch den Bilddatensatz festgelegt, die senkrecht auf dem Vektor steht. Dabei werden die auf einer Seite der Ebene liegenden Bilddaten ausgeblendet, so dass z. B. die zwischen den Ebenen liegende Struktur frei geschnitten wird. Im Unterschied zum Stand der Technik kann für die Ebene eine Freiformfläche oder eine gewölbte Fläche, insbesondere eine Kugelfläche mit variablem Radius, verwendet werden, so dass sie sich der interessierenden Struktur anpassen lässt.

Gemäß einer bevorzugten Ausführungsform umfasst das Verfahren einen Verfahrensschritt zur Durchführung von Messungen und/oder Setzen von Landmarken in einem mehrdimensionalen dynamischen Bilddatensatz des Objekts, der eine Sequenz aus mehreren nacheinander aufgenommenen 2D oder 3D Frames enthält. Das Verfahren ist dadurch gekennzeichnet, dass ein interessierender Frame ausgewählt wird, in dem die Messung erfolgen soll, und darauf hin die Sequenz durch aufeinander folgenden Wiedergabe der einzelnen Frames abgespielt wird, wobei die Wiedergabe beim interessierenden Frame für eine vorbestimmte Zeitspanne anhält, während derer der Benutzer eine Markierung setzen oder eine Messung vornehmen kann. Dadurch kann der Benutzer das Objekt dynamisch betrachten, erhält aber gleichzeitig für eine Zeitspanne für z. B. 1 bis 2 Sekunden die Möglichkeit, einen bestimmten Frame genauer zu betrachten und darin z. B. mit der Maus einen Messpunkt oder eine Landmarke zu setzen oder eine Distanz auszumessen.

Besonders bevorzugt wird die Wiedergabeschleife mehrmals wiederholt, wobei die Wiedergabe beim interessierenden Frame jeweils für die vorbestimmte Zeitspanne anhält. Gemäß einer anderen Ausführungsform wird die Wiedergabeschleife ebenfalls mehrmals durchlaufen, wobei die Wiedergabe jedoch bei jeder Wiedergabeschleife bei einem anderen Frame anhält. Diese Art der Wiedergabe kann für verschiedene Sichtebenen eines 4D Datensatzes wiederholt werden.

Aus verschiedenen Messungen in verschiedenen Schnittebenen und/oder zu verschiedenen Zeitpunkten bzw. Zeitintervallen können optional Messungen sowohl örtlich und/oder zeitlich verknüpft werden. Aus diesen Verknüpfungen werden vorzugsweise weitere Messwerte abgeleitet, wie z. B. die Veränderung einer Messung über die Zeit und/oder im Raum. Hierbei kann es sich z.B. um Flächen, Winkel, Volumina und deren zeitliche Veränderung handeln, so z.B. die Volumenänderung des Herzschlagvolumens über die Zeit oder die Durchmesseränderung des Mitralklappenrings über die Zeit.

Zur Darstellung solcher Messergebnisse wird gemäß einer bevorzugten Ausführungsform eine zweidimensionale Ansicht der interessierenden Struktur durch Surface Rendering oder Volume Rendering erzeugt. In dieser Ansicht wird zumindest ein Voxel entsprechend den Messergebnisse oder den abgeleiteten Messergebnissen farblich hervorgehoben.

Gemäß Anspruch 13 ist die Erfindung auch auf eine Vorrichtung gerichtet, die zur Durchführung des Verfahrens geeignet ist.

Schließlich ist die Erfindung auch auf ein Computerprogrammprodukt gerichtet, welches auf einem computerlesbaren Medium gespeicherten Softwarecode enthält, welcher einen Computer zur Ausführung des oben beschriebenen Verfahrens befähigt, wenn das Computerprogrammprodukt auf dem Computer installiert ist.

Die Erfindung wird nun anhand eines Ausführungsbeispiels mit Bezug auf die beiliegenden Zeichnungen näher erläutert. In den Zeichnungen zeigen:
- Fig. 1: Ein Flussdiagramm mit dem Verfahrensablauf des Untersuchungsverfahrens gemäß einer Ausführungsform der Erfindung;
- Fig. 2: eine schematische Darstellung der Freiheitsgrade bei der Bewegung einer Sichtebene durch einen Bilddatensatz;
- Fig. 3: schematische Darstellungen eines Schnittbildes mit einer interessierenden Struktur, welche durch einen optionalen Verfahrensschritt frei geschnitten wurde;
- Fig. 4: eine schematische Darstellung der dynamischen Wiedergabe und Messung gemäß dem zweiten Aspekt des erfindungsgemäßen Verfahrens;
- Fig. 5: eine durch Volume Rendering erzeugte Ansicht eines Herzens mit eingefärbten interessierenden Bereichen;
- Fig. 6: eine schematische Darstellung einer Vorrichtung gemäß einer Ausführungsform der Erfindung.

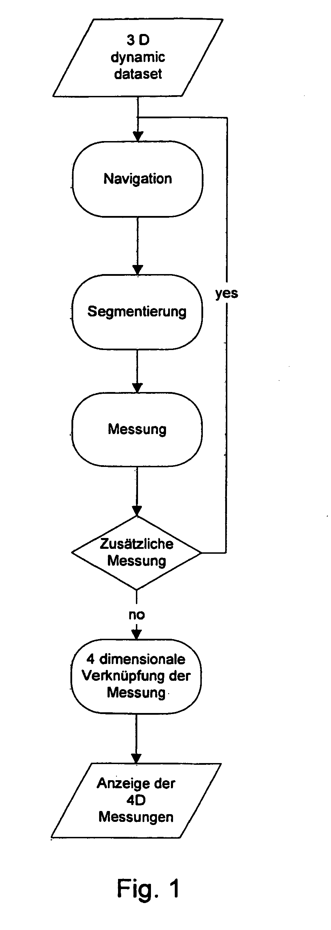

Fig. 1 gibt einen Überblick über ein Beispiel eines vollständigen Untersuchungsverfahrens eines dreidimensionalen dynamischen (d.h. vierdimensionalen) Bilddatensatzes 8. Zumindest die Schritte 14, 18 und 20 sind hierbei optional.

Gemäß Schritt 12 navigiert der Benutzer durch den Bilddatensatz, um ein Schnittbild zu finden, auf dem die interessierende Struktur günstig dargestellt ist. Optional kann er in Schritt 14 den Bilddatensatz segmentieren, d. h. die interessierende Struktur freischneiden. In Schritt 16 wird dann die eigentliche Messung durchgeführt, wobei z.B. eine Landmarke gesetzt oder eine Distanz oder eine Fläche auf einem Schnittbild gemessen wird. Diese 3 Schritte werden nach Bedarf zur Durchführung weitere Messungen wiederholt. In Schritt 18 werden dann die Messergebnisse örtlich und/oder zeitlich verknüpft und in Schritt 20 angezeigt. Dabei besteht die Möglichkeit, die Messergebnisse farblich im Bilddatensatz hervorzuheben.

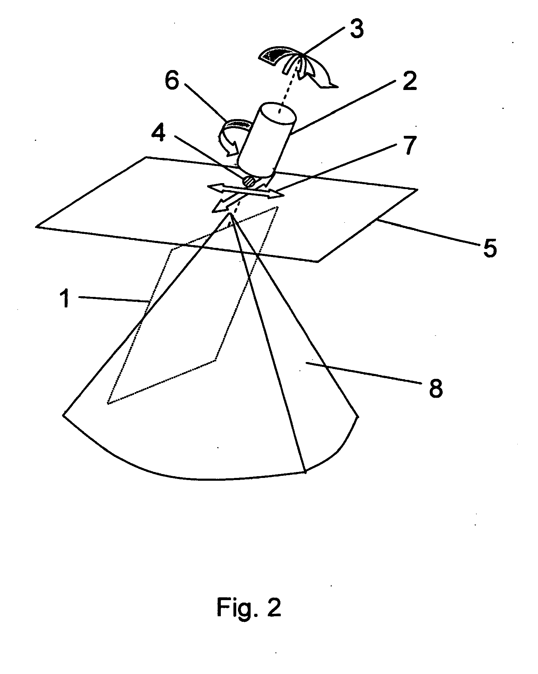

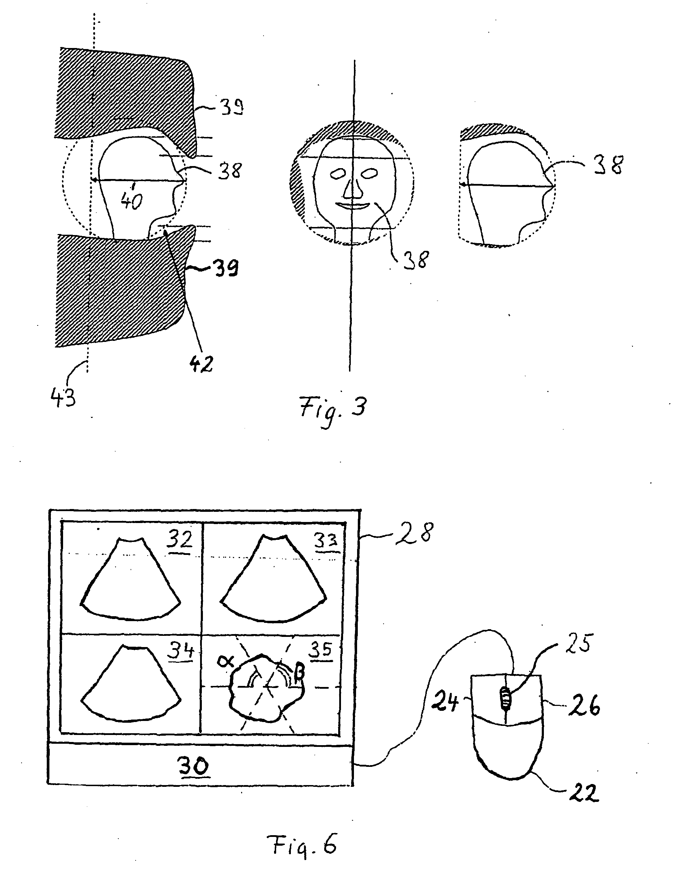

Der Verfahrensschritt 12 der Navigation wird nun anhand der Figuren 2 und 6 näher beschrieben. Figur 2 zeigt ein dreidimensionales Bildvolumen 8, welches durch eine dreidimensionale Ultraschallmessung gewonnen wurde. Dabei wurde ein Ultraschallwandler auf der Patientenoberfläche geschwenkt, um so Bilddaten aus einem kegelförmigen Datenvolumen zu erhalten. Die Navigation der Sichtebene durch dieses Bildvolumen wird nun der Bewegung des Ultraschallkopfes nachgebildet. Die Figur zeigt daher eine virtuelle Probe 2, die mit einer virtuellen Schallebene 1, der Sichtebene, fest verbunden ist. Es können hierbei auch mehrere Sichtebenen simultan navigiert werden, z. B. bei einer Aufnahme des Herzens zwei Langachsen- und ein Kurzachsenschnitt. Ein Schwenken der virtuellen Probe 2 entsprechend der Kennzeichnung 3 in Fig. 2 erfolgt um ihren Fußpunkt 4 herum. Diese Schwenkbewegung kann z. B. auf ± 80° limitiert sein, um somit auch die Bewegungsbeschränkungen einer interaktiven Untersuchung nachzubilden.

Mit Bezug auf Fig. 6 wird ein der Sichtebene 1 entsprechendes Schnittbild 32 auf einem Bildschirm 28 dargestellt. Der Bildschirm ist mit einem Computer 30 verbunden, an den wiederum das Eingabegerät z.B. in Form eine Computermaus 22 angeschlossen ist. Die Maus weist eine linke Maustaste 24, eine rechte Maustaste 26 und ein Rändelrad 25 auf. Neben dem der Sichtebene 1 entsprechenden Schnittbild 32 werden in dem gezeigten Beispiel auf dem Bildschirm 28 auch zwei weitere. Schnittbilder 33, 34 dargestellt, welche dem gleichen Anstellwinkel der virtuellen Probe 2 entsprechen, jedoch um die Winkel α bzw. β gegenüber der Sichtebene 1 gedreht sind. Dies ist auf einem weiteren Sichtfenster 35 dargestellt, welches einen Querschnitt durch den Bilddatensatz 8 zeigt, auf dem die Position der dargestellten Schnittbilder 32, 33, 34 als gestrichelte Linien dargestellt sind. Diese Art der Aufteilung des Bildschirms 28 ist jedoch nur ein bevorzugtes Beispiel.

Zurück kommend auf Fig. 2 kann der Fußpunkt 4 der virtuellen Probe 2 nur entlang einer virtuellen Aufnahmeoberfläche 5 bewegt werden. Hierbei handelt es sich um eine Nachbildung der Fläche, an der die Probe oder das Akquisitionsgerät während einer interaktiven Messung anliegt und auf der sie bewegt werden kann. Bei Ultraschallaufnahmen ist dies oft die Hautfläche des Patienten, es kann jedoch auch eine körperinterne Fläche wie z.B. die Luftröhre sein, wenn der Ultraschallwandler durch diese eingeführt wird, oder eine Knochenoberfläche oder eine durch die Art der Aufnahme bedingte körperexterne Oberfläche. Die virtuelle Aufnahmeoberfläche 5 kann sowohl eben sein als auch eine gewisse Krümmung aufweisen, die beispielsweise dem geschallten Objekt nachempfunden ist.

Die Rotation bzw. Drehung um die Längsachse der Probe 2 entsprechend dem Pfeil 6 erfolgt z. B. mit dem Rändelrad der Maus und ist Sinnvollerweise auf z. B. ± 90° limitiert. Eine Translation entlang der virtuellen Hautebene 5 gemäß der Pfeile 7 erfolgt z. B. mit der rechten Maustaste.

Die virtuelle Hautebene 5 kann auch als Kugelfläche realisiert werden, wobei die Kugel dabei vorzugsweise knapp das Bildvolumen 8 umschließt. Auf diese Weise sind prinzipiell alle Schnittebenen möglich, was allerdings die Orientierung in dem Datenvolumen erschweren kann.

Fig. 3 illustriert den optionalen Verfahrenschritt 16, bei welchem die interessierende Struktur 38, hier z. B. der Kopf eines Fötus, frei geschnitten wird. Die linke Darstellung zeigt ein Schnittbild durch den Bilddatensatz, wobei der Kopf 38 durch die schraffiert gezeigten Strukturen 39, z. B. die Gebärmutter überdeckt ist. Um diese Strukturen abzuschneiden legt der Benutzer einen als Pfeil 40 dargestellten Vektor auf dem Schnittbild fest. Durch den Anfangspunkt des Vektors verläuft eine Ebene 43, durch den Endpunkt eine Kugeloberfläche 42. Wie in der rechten Darstellung zu sehen, werden alle Bilddaten abgeschnitten, die außerhalb der beiden Flächen 43, 42 liegen. Durch die Kugelform der Fläche 42 enthält das segmentierte interessierende Volumen fast ausschließlich den Kopf 38. Wird nun gemäß der mittleren Darstellung durch Volume Rendering eine Oberflächenansicht des Kopfes erzeugt, so ist das Gesicht nicht mehr durch die Gebärmutterwand 39 verdeckt.

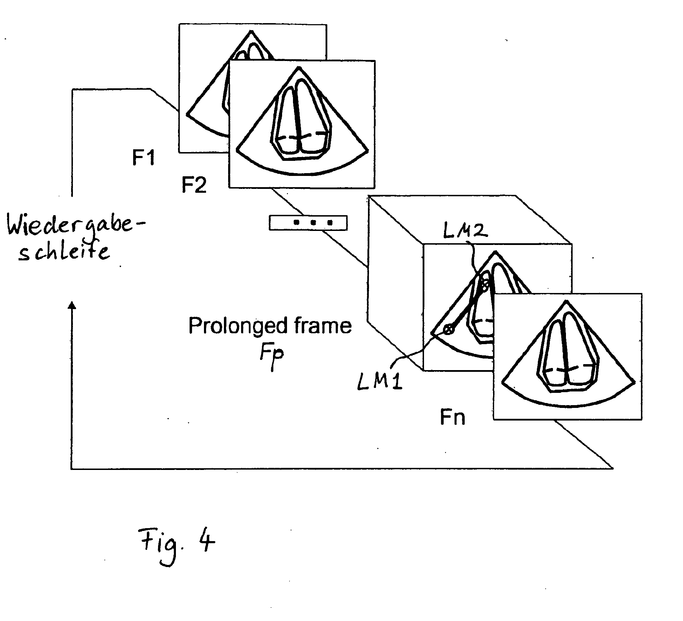

Hat der Benutzer somit die Bildbereiche gefunden und frei geschnitten, in denen er messen will, werden diese dynamisch dargestellt. Der Verfahrenschritt 10 zur Durchführung einer Messung in einem dynamischen Bilddatensatz wird nun anhand der Fig. 4 näher erläutert. Dabei wird zunächst aus der zeitlichen Sequenz aus 2D oder 3D Bildern (Frames) ein interessierender Frame Fp definiert oder errechnet. Daraufhin wird die dynamische Sequenz von Bildern mit einer normalen Abspielgeschwindigkeit wiedergegeben. Im Falle einer Aufnahme des Herzens werden beispielsweise 20 bis 30 Frames abgespielt, die während eines Herzschlages aufgenommen wurden. Eine normale Abspielgeschwindigkeit ist dabei etwa 20 Frames pro Sekunde.

Wird der interessierende Frame Fp erreicht, so stoppt die Wiedergabe für eine vorbestimmte Zeitspanne. In Fig. 4 ist dieser Frame mit "Prolonged frame Fp" gekennzeichnet. Während dieser Zeit kann der Benutzer dann in dem länger dargestellten Bild Fp die Markierungen LM1 und LM2 setzen und z. B. die Distanz zwischen diesen so markierten Landmarken messen. Die Zeitspanne, während der die Wiedergabe angehalten wird, kann entweder eine vordefinierte Zeit von z. B. 0,5 bis 5 Sekunden und besonders bevorzugt 1 bis 2 Sekunden betragen. Gemäß einer anderen Ausführungsform kann die Zeitspanne auch solange betragen, wie die Messung dauert. Nach der vorbestimmten Zeitdauer und/oder nachdem die Messung vollendet wurde, wird die Wiedergabeschleife weiter abgespielt. Auf diese Weise hat der Benutzer sowohl den dynamischen Eindruck der Sequenz, als auch ein statisches Bild aus der Sequenz zur Verfügung, um die Messung exakt einzeichnen zu können. Dieser Vorgang kann mehrmals in verschiedenen Bildebenen wiederholt werden. Nach dem Setzen der Punkte kann dieses Verfahren auch zur Korrektur der gesetzten Punkte angewandt werden.

Gemäß einer weiteren Ausführungsform wird die Wiedergabeschleife mehrmals durchlaufen, wobei die Wiedergabe jeweils bei einem anderen Frame, z. B. bei F1, F2,... Fn, anhält. Damit kann z. B. die gleiche Struktur in jeder Bewegungsphase vermessen werden.

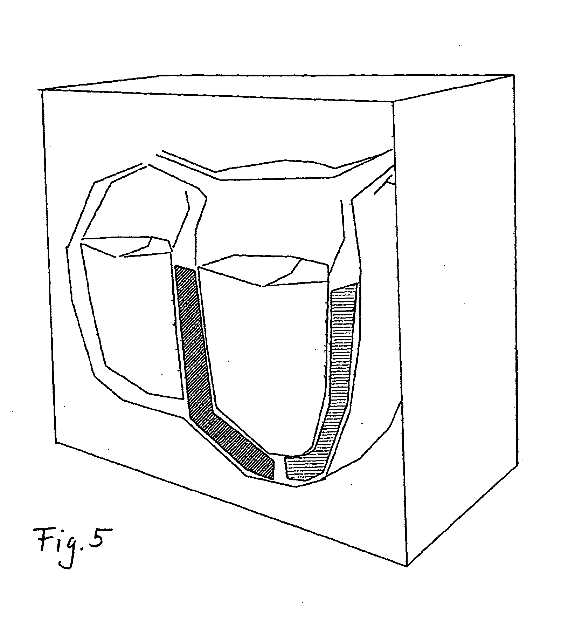

Aus den so getätigten Messungen in verschiedenen Schnittebenen und/oder zu verschiedenen Zeitpunkten können nun Messungen sowohl örtlich als auch zeitlich verknüpft werden. Aus diesen Verknüpfungen können weitere Messwerte abgeleitet werden, wie z. b. die Veränderung einer Messung über die Zeit (Schritt 18). In einem optionalen Verfahrensschritt 20 werden diese Messergebnisse z. B. in einer zweidimensionalen durch Surface Rendering erhaltenen Ansicht des Objekts farblich hervorgehoben. Fig. 5 zeigt z. B. eine solche Ansicht eines Herzens, in der ein schraffierter Bereich 45 z. B. in rot und ein gepunkteter Bereicht 46 z. B. in Türkis eingefärbt wurde. Die Farbkodierung entspricht z. B. dem Zeitpunkt der Kontraktion der entsprechend eingefärbten Herzkammerwand.

In Fig. 6 ist ein Ausführungsbeispiel der erfindungsgemäßen Vorrichtung schematisch wiedergegeben. Diese umfasst einen Bildschirm 28, ein Eingabegerät 22 und eine Recheneinheit 30, die z. B. ein Computer sein kann. Die Erfindung kann auch in einem Computerprogrammprodukt verkörpert sein, welches Softwarecode-Abschnitte enthält, die auf den Computer 30 aufgespielt werden, so dass dieser das umschriebene Verfahren durchführt.

Die Erfindung stellt somit ein Verfahren zur einfachen Navigation in mehrdimensionalen Bilddaten, einen optionalen Verfahrensschritt zur Segmentierung von Strukturen, ein Verfahren zur Durchführung von Messungen auf dynamischen Daten, sowie einen Verfahrensschritt zur Verknüpfung von vierdimensionalen Messungen und einen Verfahrensschritt 20 zur Darstellung der dynamischen Messergebnisse im vierdimensionalen Datensatz bereit.

## Patentansprüche

1. Verfahren zur Navigation und Messung in einem mehrdimensionalen Bilddatensatz (8) eines Objekts, der insbesondere durch ein medizinisches Bildgebungsverfahren gewonnen wurde, umfassend
- einen Verfahrensschritt (12) zur Navigation in dem mehrdimensionalen Bilddatensatz (8), bei welchem der Benutzer durch ein Eingabegerät (22) eine Sichtebene (1) durch den Bilddatensatz (8) bewegt und währenddessen ein dieser Sichtebene entsprechendes Schnittbild (32) dargestellt wird,
wobei die Sichtebene (1) den Bilddatensatz (8) in einem Winkel schneidet, der einem während einer interaktiven bildgebenden Untersuchung erhaltenen Blickwinkel entspricht, und
wobei die Freiheitsgrade (3,6,7) der Bewegung der Sichtebene (1) den Freiheitsgraden der Bewegung einer Probe (2) während einer interaktiven bildgebenden Untersuchung entsprechen, **dadurch gekennzeichnet, dass**
zusätzlich zu dem der aktuellen Sichtebene (1) entsprechenden Schnittbild (32) ein oder zwei Schnittbilder (33,34) dargestellt werden, die um einen festgelegten Winkel (α,β) gegenüber der Sichtebene gedreht sind.

2. Verfahren nach Anspruch 1
**dadurch gekennzeichnet, dass**
die Sichtebene (1) dem Schallfeld eines Ultraschallwandlers (2) entspricht.

3. Verfahren nach Anspruch 1 oder 2,
**dadurch gekennzeichnet, dass**
die Bewegung der Sichtebene (1) der Bewegung eines Ultraschallwandlers (2) während einer interaktiven Ultraschalluntersuchung entspricht, wobei durch Betätigen des Eingabegeräts (22) ein Schwenken (3), Drehen (6) und Verschieben (7) der Sichtebene (1) auf einer virtuellen Aufnahmeoberfläche (5) möglich ist.

4. Verfahren nach Anspruch 3,
**dadurch gekennzeichnet, dass**
das Eingabegerät eine Computermaus (22) ist und dass die Schwenkbewegung (3), die Drehbewegung (6) und die Verschiebung (7) jeweils durch die linke (24) oder rechte (26) Maustaste oder durch ein Rändelrad (25) der Maus gesteuert werden.

5. Verfahren nach Anspruch 3 oder 4,
**dadurch gekennzeichnet, dass**
die virtuelle Aufnahmeoberfläche (5) eine Ebene oder eine Kugelfläche ist.

6. Verfahren nach einem der vorhergehenden Ansprüche,
**gekennzeichnet durch**
einen weiteren Verfahrensschritt (14) zum Freischneiden einer interessierenden Struktur (38) im Objekt, bei welchem
- auf einem Schnittbild ein Vektor (40) festgelegt wird, der die interessierende Struktur (38) überspannt,
- **durch** den Endpunkt und/oder den Anfangspunkt des Vektor (40) eine gerade (43) oder gewölbte Ebene (42) oder eine Freiformfläche **durch** den Bilddatensatz festgelegt wird, die senkrecht auf den Vektor steht,
- und die auf einer Seite der Ebene (43,42) liegenden Bilddaten ausgeblendet werden.

7. Verfahren nach einem der vorhergehenden Ansprüche, zur Navigation und Messung in einem mehrdimensionalen Bilddatensatz (8) eines Objekts, der insbesondere durch ein medizinisches Bildgebungsverfahren gewonnen wurde, umfassend einen Verfahrensschritt (16) zur Durchführung von Messungen und/oder Setzen von Landmarken in einem mehrdimensionalen dynamischen Bilddatensatz (8) des Objekts, der eine Sequenz aus mehreren nacheinander aufgenommenen zweidimensionalen oder dreidimensionalen Frames (F1,F2,...Fn) enthält,
**gekennzeichnet durch**
- die Auswahl eines interessierenden Frame (Fp), in dem die Messung erfolgen soll,
- Abspielen der Sequenz **durch** aufeinander folgende Wiedergabe der einzelnen Frames, wobei die Wiedergabe beim interessierenden Frame (Fp) für eine vorbestimmte Zeitspanne anhält, während derer der Benutzer eine Markierung (LM1, LM2) setzen oder eine Messung vornehmen kann.

8. Verfahren nach Anspruch 7,
**dadurch gekennzeichnet, dass**
die Sequenz mehrmals abgespielt wird, wobei bei jeder Wiedergabeschleife die Wiedergabe beim interessierenden Frame (Fp) für eine vorbestimmte Zeitspanne anhält.

9. Verfahren nach Anspruch 7,
**dadurch gekennzeichnet, dass**
die Sequenz mehrmals abgespielt wird, wobei bei jeder Wiedergabeschleife die Wiedergabe beim einem anderen Frame (F1, F2, ...Fn) für eine vorbestimmte Zeitspanne anhält.

10. Verfahren nach einem der Ansprüche 7 bis 9,
**dadurch gekennzeichnet, dass**
das Abspielen der Sequenz für verschiedene Sichtebenen in einem vierdimensionalen Datensatz wiederholt wird.

11. Verfahren nach einem der Ansprüche 7 bis 10,
**gekennzeichnet durch**
einen weiteren Verfahrensschritt (18), in dem aus den gemäß Ansprüchen 7 bis 10 erhaltenen Messergebnissen weitere Messwerte abgeleitet werden.

12. Verfahren nach einem der Ansprüche 7 bis 11,
**gekennzeichnet durch**
einen weiteren Verfahrensschritt (20), in dem eine zweidimensionale Ansicht (44) der interessierenden Struktur **durch** Surface oder Volume Rendering erzeugt wird,
wobei in der zweidimensionalen Ansicht (44) zumindest ein Voxel entsprechend der in Schritt (c) erhaltenen Messergebnissen oder der abgeleiteten Messergebnisse farblich hervorgehoben wird (18).

13. Vorrichtung zur Navigation und Messung in einem mehrdimensionalen Bilddatensatz (8) eines Objekts, der insbesondere durch ein medizinisches Bildgebungsverfahren gewonnen wurde, umfassend
- ein Eingabegerät (22), mit welchem ein Benutzer zur Navigation eine Sichtebene (1) durch den Bilddatensatz (8) bewegen kann,
- ein Berechnungsmittel (30) zur Generierung eines der Sichtebene (1) entsprechenden Schnittbildes (32) durch den Bilddatensatz, und
- einen Bildschirm (28) zur Darstellung des Schnittbildes (32), wobei
die Sichtebene (1) den Bilddatensatz (8) in einem Winkel schneidet, der einem während einer interaktiven bildgebenden Untersuchung erhaltenen Blickwinkel entspricht, und
die Freiheitsgrade (3,6,7) der Bewegung der Sichtebene (1) den Freiheitsgraden der Bewegung einer Probe (2) während einer interaktiven bildgebenden Untersuchung entsprechen,
**dadurch gekennzeichnet, dass**
der Bildschirm (28) zur Darstellung sowohl des der aktuellen Sichtebene (1) entsprechenden Schnittbildes (32) geeignet ist, als auch zur Darstellung von ein oder zwei Schnittbildern (33, 34), die um einen festgelegten Winkel (α,β), insbesondere um 60°, gegenüber der Sichtebene gedreht sind.

14. Vorrichtung nach Anspruch 13,
**dadurch gekennzeichnet, dass**
die Bewegung der Sichtebene (1) der Bewegung eines Ultraschallwandlers (2) während einer interaktiven Ultraschalluntersuchung entspricht, wobei durch Betätigen des Eingabegeräts (22) ein Schwenken (3), Drehen (6) und Verschieben (7) der Sichtebene (1) auf einer virtuellen Aufnahmeoberfläche (5) möglich ist.

15. Vorrichtung nach Anspruch 14,
**dadurch gekennzeichnet, dass**
das Eingabegerät (22) eine Computermaus ist und dass die Schwenkbewegung (3), die Drehbewegung (6) und die Verschiebung (7) jeweils durch die linke (24) oder rechte (26) Maustaste oder durch ein Rändelrad (25) der Maus steuerbar sind.

16. Vorrichtung nach einem der Ansprüche 13 bis 15,
**dadurch gekennzeichnet, dass**
- auf einem Schnittbild ein Vektor (40) festlegbar ist, der eine interessierende Struktur (38) überspannt,
- dass durch den Endpunkt und/oder den Anfangspunkt des Vektors (40) eine gerade (43) oder gewölbte Ebene (42) oder eine Freiformfläche durch den Bilddatensatz festlegbar ist, die senkrecht auf den Vektor (40) steht,
- und dass die auf einer Seite der Ebene liegenden Bilddaten zum Freischneiden der interessierenden Struktur (38) im Objekt aüsblendbar sind.

17. Vorrichtung nach einem der Ansprüche 13 bis 16, zur Navigation und Messung in einem mehrdimensionalen Bilddatensatz (8) eines Objekts, der insbesondere durch ein medizinisches Bildgebungsverfahren gewonnen wurde, wobei der Bilddatensatz eine Sequenz aus mehreren nacheinander aufgenommenen zweidimensionalen oder dreidimensionalen Frames (F1, F2, ...Fn) enthält, umfassend
- ein Eingabegerät (22), mit welchem ein Benutzer in einem Frame (Fp) eine Markierung (LM1,LM2) setzen oder eine Messung vornehmen kann, und
- einen Bildschirm (28) zum Abspielen der Sequenz durch aufeinander folgende Wiedergabe der einzelnen Frames,
**dadurch gekennzeichnet, dass**
ein interessierender Frame (Fp), in dem die Messung erfolgen soll, festlegbar ist, und dass
die Wiedergabe der Sequenz beim interessierenden Frame (Fp) für eine vorbestimmte Zeitspanne anhält, während derer der Benutzer eine Markierung (LM1,LM2) setzen oder eine Messung vornehmen kann.

18. Computerprogrammprodukt, welches auf einem computerlesbaren Medium gespeicherten Softwarecode enthält, welcher einen Computer zur Ausführung des Verfahren nach einem der Ansprüche 1 bis 13 befähigt, wenn das Computerprogrammprodukt auf dem Computer installiert ist.

## Claims

1. Method of navigation and measurement in a multidimensional image data set (8) of an object, which has been obtained in particular by a medical imaging method, comprising
- a step (12) for navigation in the multidimensional image data set (8), in which the user moves a plane of view (1) through the image data set (8) by an input device (22) and meanwhile a section image (32) corresponding to this plane of view is represented,
wherein the plane of view (1) intersects the image data set (8) at an angle corresponding to an angle of view obtained during an interactive imaging examination, and
wherein the degrees of freedom (3, 6, 7) of movement of the plane of view (1) correspond to the degrees of freedom of movement of a probe (2) during an interactive imaging examination,
**characterised in that**
in addition to the section image (32) corresponding to the current plane of view (1), one or two section images (33, 34) are represented which are rotated through a fixed angle (α,β), in particular through 60°, relative to the plane of view.

2. Method according to claim 1,
**characterised in that**
the plane of view (1) corresponds to the sound field of an ultrasound transducer (2).

3. Method according to claim 1 or 2,
**characterised in that**
the movement of the plane of view (1) corresponds to the movement of an ultrasound transducer (2) during an interactive ultrasound examination, wherein by actuating the input device (22) pivoting (3), rotation (6) and sliding (7) of the plane of view (1) on a virtual recording surface (5) is possible.

4. Method according to claim 3,
**characterised in that**
the input device is a computer mouse (22) and **in that** the pivoting movement (3), the rotary movement (6) and the sliding (7) are respectively controlled by the lefthand (24) or right-hand (26) mouse button or by a scrolling wheel (25) of the mouse.

5. Method according to claim 3 or 4,
**characterised in that**
the virtual recording surface (5) is a plane or a spherical surface.

6. Method according to one of the preceding claims,
**characterised by**
a further step (14) for cutting clear a structure of interest (38) in the object, in which
- on a section image a vector (40) is set up, which spans the structure of interest (38),
- through the end point and/or the starting point of the vector (40) a straight (43) or curved plane (42) or a free-form surface extending perpendicular to the vector is set up through the image data set,
- and the image data lying on one side of the plane (43, 42) are blanked out.

7. Method according to one of the preceding claims, for navigation and measurement in a multidimensional image data set (8) of an object, which has been obtained in particular by a medical imaging method, comprising a step (16) for carrying out measurements and/or setting landmarks in a multidimensional dynamic image data set (8) of the object, which contains a sequence of plural consecutively captured two-dimensional or three-dimensional frames (F1, F2, ...Fn),
**characterised by**
- selection of a frame of interest (Fp), in which the measurement is to take place,
- playing back of the sequence by consecutive display of the individual frames, wherein the display stops at the frame of interest (Fp) for a predetermined time span, during which the user can set a marker (LM1, LM2) or carry out a measurement.

8. Method according to claim 7,
**characterised in that**
the sequence is played back more than once, wherein in each display loop the display stops at the frame of interest (Fp) for a predetermined time span.

9. Method according to claim 7,
**characterised in that**
the sequence is played back more than once, wherein in each display loop the display stops at a different frame (F1, F2, ...Fn) for a predetermined time span.

10. Method according to one of claims 7 to 9,
**characterised in that**
the playback of the sequence is repeated for different planes of view in a four-dimensional data set.

11. Method according to one of claims 7 to 10,
**characterised by**
a further step (18), in which further readings are derived from the measurement results obtained according to claims 7 to 10.

12. Method according to one of claims 7 to 11,
**characterised by**
a further step (20), in which a two-dimensional rendering (44) of the structure of interest is generated by surface or volume rendering,
wherein in the two-dimensional rendering (44) at least one voxel corresponding to the measurement results obtained in step (c) or the derived measurement results is highlighted in colour (18).

13. Device for navigation and measurement in a multidimensional image data set (8) of an object, which has been obtained in particular by a medical imaging method, comprising
- an input device (22), with which a user can move through the image data set (8) in order to navigate a plane of view (1)
- a computing means (30) for generating a section image (32) through the image data set corresponding to the plane of view (1), and
- a screen (28) for representing the section image (32), wherein
the plane of view (1) intersects the image data set (8) at an angle which corresponds to an angle of view obtained during an interactive imaging examination, and
the degrees of freedom (3, 6, 7) of movement of the plane of view (1) correspond to the degrees of freedom of movement of a probe (2) during an interactive imaging examination,
**characterised in that**
the screen (28) is suitable for representing both the section image (32) corresponding to the current plane of view (1) and for representing one or two section images (33, 34) which have been rotated about a fixed angle (α,β), in particular through 60°, relative to the plane of view.

14. Device according to claim 13,
**characterised in that**
the movement of the plane of view (1) corresponds to the movement of an ultrasound transducer (2) during an interactive ultrasound examination, wherein by actuating the input device (22) pivoting (3), rotation (6) and sliding (7) of the plane of view (1) on a virtual recording surface (5) is possible.

15. Device according to claim 14,
**characterised in that**
the input device (22) is a computer mouse and **in that** the pivoting movement (3), the rotary movement (6) and the sliding (7) are controllable respectively by the lefthand (24) or right-hand (26) mouse button or by a scrolling wheel (25) of the mouse.

16. Device according to one of claims 13 to 15,
**characterised in that**
- on a section image a vector (40) may be set up, which spans a structure (38) of interest,
- through the end point and/or the starting point of the vector (40) a straight (43) or curved plane (42) or a free-form surface extending perpendicular to the vector (40) may be set up through the image data set,
- and the image data lying on one side of the plane for cutting clear the structure (38) of interest in the object may be blanked out.

17. Device according to one of claims 13 to 16, for navigation and measurement in a multidimensional image data set (8) of an object, which has been obtained in particular by a medical imaging method, wherein the image data set contains a sequence of plural consecutively captured two-dimensional or three-dimensional frames (F1, F2... Fn), comprising
- an input device (22), with which a user can set a marker (LM1, LM2) or carry out a measurement in a frame (Fp), and
- a screen (28) for playing back the sequence by consecutive display of the individual frames,
**characterised in that**
a frame of interest (Fp), in which the measurement is to take place, may be selected and **in that**
the display of the sequence stops at the frame of interest (Fp) for a predetermined time span, during which the user can set a marker (LM1, LM2) or carry out a measurement.

18. Computer program product, which contains software code stored on a computer-readable medium, which enables a computer to carry out the method according to one of claims 1 to 13 if the computer program product is installed on the computer.

## Revendications

1. Procédé de navigation et de mesure dans un ensemble de données image à plusieurs dimensions (8) d'un objet, qui a été en particulier obtenu par un procédé d'imagerie médicale, comprenant
- une étape de procédé (12) de navigation dans l'ensemble de données image à plusieurs dimensions (8), dans lequel l'utilisateur déplace au moyen d'un appareil de saisie (22) un plan d'observation (1) à travers l'ensemble de données image (8) et pendant cela une image en coupe (32) correspondant à ce plan d'observation (1) est représentée,
ledit plan d'observation (1) recoupant l'ensemble de données image (8) sous un angle qui correspond à un angle d'observation obtenu pendant une analyse d'imagerie interactive, et
les degrés de liberté (3, 6, 7) du mouvement du plan d'observation (1) correspondant aux degrés de liberté du mouvement d'une sonde (2) pendant une analyse d'imagerie interactive,
**caractérisé en ce que**
en supplément à l'image en coupe (32) correspondant au plan de coupe actuel (1), on représente une ou deux images en coupe (33, 34) qui sont tournées par rapport au plan d'observation d'un angle prédéterminé (a, b), en particulier d'un angle de 60°.

2. Procédé selon la revendication 1,
**caractérisé en ce que** le plan de coupe (1) correspond au plan d'émission d'un transducteur à ultrasons (2).

3. Procédé selon la revendication 1 ou 2,
**caractérisé en ce que** le mouvement du plan d'observation (1) correspond au mouvement d'un transducteur à ultrasons (2) pendant un examen interactif aux ultrasons, dans lequel par actionnement de l'appareil de saisie (22) il est possible de procéder à un basculement (3), une rotation (6) et une translation (7) du plan d'observation (1) sur une surface d'enregistrement virtuelle (5).

4. Procédé selon la revendication 3,
**caractérisé en ce que** l'appareil de saisie est une souris d'ordinateur (22), et **en ce que** le mouvement de basculement (3), le mouvement de rotation (6) et la translation (7) sont commandés respectivement par la touche de gauche (24) ou la touche de droite (26) ou encore par une roulette (25) de la souris.

5. Procédé selon la revendication 3 ou 4,
**caractérisé en ce que** la surface d'enregistrement virtuelle (5) est un plan ou une surface sphérique.

6. Procédé selon l'une des revendications précédentes,
**caractérisé par**
une étape de procédé supplémentaire (14) destinée à découper une structure intéressante (38) dans l'objet, dans laquelle
- on fixe un vecteur (40), sur une image en coupe, qui couvre la structure intéressante (38),
- on détermine au moyen du point de départ et/ou du point final du vecteur (40) un plan rectiligne (43) ou un plan bombé (42) ou encore une surface à forme libre à travers l'ensemble de données image, qui est perpendiculaire au vecteur,
- et on masque les données image qui se trouvent sur un côté du plan (43, 42).

7. Procédé selon l'une des revendications précédentes, pour la navigation et la mesure dans un ensemble de données image à plusieurs dimensions (8) d'un objet, qui est a été obtenu en particulier par un procédé d'imagerie médicale, comprenant une étape de procédé (16) consistant à exécuter des mesures et/ou à placer des repères dans un ensemble de données image dynamique à plusieurs dimensions (8) de l'objet, qui contient une séquence formée de trames bidimensionnelles ou tridimensionnelles (F1, F2, ... Fn) prises les unes après les autres,
**caractérisé par** les opérations consistant à
- choisir une trame intéressante (Fp) dans laquelle la mesure doit avoir lieu,
- reproduire la séquence par représentation successive des trames individuelles les unes après les autres, la représentation étant arrêtée pendant une période temporelle prédéterminée au niveau de la trame intéressante (Fp), pendant laquelle l'utilisateur peut placer une marque (LM1, LM2) ou procéder à une mesure.

8. Procédé selon la revendication 7,
**caractérisé en ce que** la séquence est reproduite plusieurs fois, et à chaque bouclage de la représentation, la représentation est arrêtée pendant une période temporelle prédéterminée au niveau de la trame intéressante (Fp).

9. Procédé selon la revendication 7,
**caractérisé en ce que** la séquence est reproduite plusieurs fois, et à chaque bouclage de la représentation, la représentation est arrêtée pendant une période temporelle prédéterminée au niveau d'une autre trame (F1, F2, ... Fn).

10. Procédé selon l'une des revendications 7 à 9,
**caractérisé en ce que** la reproduction de la séquence est répétée pour différents plans d'observation dans un ensemble de données à quatre dimensions.

11. Procédé selon l'une des revendications 7 à 10,
**caractérisé par** une étape de procédé supplémentaire (18) dans laquelle on dérive d'autres valeurs de mesures à partir des résultats de mesures obtenus d'après les revendications 7 à 10.

12. Procédé selon l'une des revendications 7 à 11,
**caractérisé par** une étape de procédé supplémentaire (20) dans laquelle on génère une vue bidimensionnelle (44) de la structure intéressante par rendu en surface ou en volume,
dans lequel on souligne dans la vue bidimensionnelle (44) de manière colorée (18) au moins un voxel, en correspondance des résultats de mesures obtenus à l'étape (c) ou des résultats de mesures dérivés.

13. Dispositif de navigation et de mesure dans un ensemble de données image à plusieurs dimensions (8) d'un objet, qui a été obtenu en particulier par un procédé d'imagerie médicale, comprenant
- un appareil de saisie (24) au moyen duquel un utilisateur peut déplacer, pour la navigation, un plan d'observation (1) à travers l'ensemble de données image (8),
- un moyen de calcul (30) pour générer à travers l'ensemble de données image un plan de coupe (32) correspondant au plan d'observation (1), et
- un écran (28) pour la représentation de l'image en coupe (32), tel que le plan de coupe (1) recoupe l'ensemble de données image (8) sous un angle qui correspond à un angle d'observation obtenu pendant un examen d'imagerie interactif, et
les degrés de liberté (3, 6, 7) du mouvement du plan d'observation (1) correspondent aux degrés de liberté du mouvement d'une sonde (2) pendant un examen d'imagerie interactif,
**caractérisé en ce que**
l'écran (28) convient aussi bien pour la représentation de l'image en coupe (32) correspondant au plan d'observation actuel (1) que pour la représentation d'une ou de deux images en coupe (33, 34) qui sont tournées d'un angle prédéterminé (a, b) par rapport au plan d'observation, en particulier d'un angle de 60°.

14. Dispositif selon la revendication 13,
**caractérisé en ce que**
le mouvement du plan d'observation (1) correspond au mouvement d'un transducteur à ultrasons (2) pendant un examen interactif aux ultrasons, dans lequel par actionnement de l'appareil de saisie (22) il est possible de procéder à un basculement (3), une rotation (6) et une translation (7) du plan d'observation (1) sur une surface d'enregistrement virtuelle (5).

15. Dispositif selon la revendication 14,
**caractérisé en ce que** l'appareil de saisie (22) est une souris d'ordinateur (22), et **en ce que** le mouvement de basculement (3), le mouvement de rotation (6) et la translation (7) sont commandés respectivement par la touche de gauche (24) ou la touche de droite (26) ou encore par une roulette (25) de la souris.

16. Dispositif selon l'une des revendications 13 à 15,
**caractérisé en ce que**
- il est possible de déterminer, sur une image en coupe, un vecteur (40) qui couvre une structure intéressante (38),
- il est possible de déterminer, au moyen du point final et/ou du point de départ du vecteur (40), un plan rectiligne (43) ou un plan bombé (42) ou encore une surface à forme libre, à travers l'ensemble de données image, qui est perpendiculaire au vecteur (40),
- et **en ce qu'**il est possible à de masquer les données image situées sur un côté du plan pour dégager dans l'objet la structure intéressante (38).

17. Dispositif selon l'une des revendications 13 à 16, pour la navigation et la mesure dans un ensemble de données image à plusieurs dimensions (8) d'un objet, qui a été obtenu en particulier par un procédé d'imagerie médicale, dans lequel l'ensemble de données image contient une séquence formée de plusieurs trames bidimensionnelles ou tridimensionnelles (F1, F2, ... Fn) enregistrées les unes après les autres, comprenant
- un appareil de saisie (22) au moyen duquel un utilisateur peut poser une marque (LM1, LM2) dans une trame (Fp) ou procéder à une mesure, et
- un écran (28) pour reproduire la séquence par représentation successive des trames individuelles les unes après les autres,
**caractérisé en ce que**
il est possible de déterminer une trame intéressante (Fp) dans laquelle doit avoir lieu la mesure, et **en ce que**
la représentation de la séquence est arrêtée pendant une période temporelle prédéterminée au niveau de la trame intéressante (Fp), pendant laquelle l'utilisateur peut poser une marque (LM1, LM2) ou exécuter une mesure.

18. Produit de programme d'ordinateur, qui contient un code logiciel mémorisé sur un support lisible à l'ordinateur, qui rend un ordinateur capable de mettre en oeuvre le procédé selon l'une des revendications 1 à 13 lorsque le produit de programme d'ordinateur est installé sur l'ordinateur.
